# EUROPEAN PATENT SPECIFICATION

(11) **EP 0 467 668 B1**
(45) Date of publication and mention of the grant of the patent: **20.12.1995**
(21) Application number: 91306504.1
(22) Date of filing: 17.07.1991
(51) Int. Cl.: A23B 7/055, A23B 7/148, A23B 7/144, A23B 7/152

(54) **Storage and transportation of goods under controlled atmospheres**
Lagerung und Transport von Gütern unter kontrollierter Atmosphäre
Magasinage et transport de marchandises sous l'atmosphère controlée

(30) Priority: 19.07.1990 GB 9015867; 11.12.1990 GB 9026904; 06.11.1990 US 609948
(43) Date of publication of application: 22.01.1992
(73) Proprietor: The BOC Group plc, Windlesham Surrey GU20 6HJ (GB)
(72) Inventor: Sadkowski, Piotr, Ash, Surrey GU12 6PH (GB); Garrett, Michael Ernest, Surrey (GB); Lacava, Alberto I., So. Plainfield, New Jersey 07080 (US); Lemcoff, Norberto, Livingston, New Jersey 07039 (US); Psaras, Dimitrios, Bound Brook, New Jersey 08805 (US); Hayashi, Shigeki, Berkeley Heights, New Jersey 07922 (US)
(74) Representative: Bousfield, Roger James

(56) References cited:
- EP-A- 0 261 422
- EP-A- 0 315 309
- DD-A- 219 377
- PATENT ABSTRACTS OF JAPAN vol. 13, no. 24 (C- 561)(3372), 19 January 1989;& JP - A - 63229118 (SUMITOMO HEAVY IND. LTD.) 26.09.1988
- PATENT ABTRACTS OF JAPAN vol. 13, no. 158 (C- 586)(3506), 17 April 1989; & JP - A - 63317040 (SHIKOKU CHEM. CORP.) 26.12. 1988

## Description

This invention relates to the storage and transportation of goods and, more particularly, to the provision of atmospheres for the storage and transportation of perishable produce such as fruit, vegetables and flowers.

It is known that such perishable produce can be carried in refrigerated containers, sometimes known as "reefers", and refrigeration units for these containers have been developed to provide a reliable piece of apparatus which can usually function for long periods of time without maintenance.

It is also known that during storage and/or transportation the preservation of perishable produce can be enhanced by controlling the atmosphere surrounding the produce. The use in this respect of an atmosphere in which nitrogen (or other inert gas) predominates is particularly useful. Furthermore, in addition to controlling the amount of oxygen present in the atmosphere, there may be a need to control (but not necessarily eliminate) the amount of other substance which may be present, for example carbon dioxide and any ethylene which might be formed by the produce in situ in the container. In addition the level of water vapour in, ie. the humidity of, the atmosphere may be important; commonly, a relatively high humidity is required.

Although a variety of processes and systems have been proposed for the control of such atmospheres, there remains a need for a reliable system which can preferably be sufficiently compact so as to fit within the confines of a standard container or reefer and which can preferably be varied to suit the requirements of the different types of produce being stored and/or transported.

It is known from Patent Abstracts of Japan, Vol 13, No 24 (C-561) (3372) of January 19 1989 that ethylene can be removed from a gas from a storage container of fresh vegetables, fruits and the like by passing the gas through a dehumidifying agent and then through an adsorbent bed of an AlCuCl₄ complex.

It is also known from EP-A-0 315 309 that intermittent removal of oxygen, carbon dioxide, water vapour and ethylene can be achieved from a produce storage area by means of an apparatus with a compressor whose outlet is connected to a gas separation means.

It is also known from DD-A-219 377 that air conditioning of storage rooms for fruit, vegetables, etc can be effected by use of apparatus which, by adsorption techniques, controls the amount of nitrogen, oxygen and water vapour to provide a desired oxygen/nitrogen ratio.

In accordance with the invention, there is provided a process for removing one or more components from the atmosphere of a container during the storage and/or transportation of perishable goods therein comprising, as sequential steps:
(a) adsorbing water vapour from the atmosphere in a first adsorption zone containing alumina or silica gel, thereby producing as non-adsorbed product water vapour-depleted atmosphere;
(b) adsorbing ethylene from the water vapour-depleted atmosphere in a second adsorption zone containing a type Y zeolite substituted with copper, cobalt or silver, thereby producing as non-adsorbed product an atmosphere depleted in water vapour and ethylene;
(c) adsorbing carbon dioxide from the water vapour-and ethylene-depleted atmosphere in a third adsorption zone containing a zeolite, thereby producing as non-adsorbed product an atmosphere depleted in water vapour, ethylene and carbon dioxide;
(d) passing said atmosphere depleted in water vapour, ethylene and carbon dioxide through a fourth adsorption zone containing a zeolite selective for adsorption of nitrogen, thereby producing as non-adsorbed product oxygen-rich gas, and desorbing sorbed gas from said fourth adsorption zone on a pressure swing cycle basis, thereby producing nitrogen-rich atmosphere, and
(e) recycling said nitrogen-rich atmosphere to said container.

The word "container" as used herein includes not only individual containers of "reefers" but also enclosed parts of warehouses, ships' holds and the like.

The system can also have means for the addition to the atmosphere of nitrogen, carbon dioxide, water and/or ethylene from a separate source and/or may have means for returning to the atmosphere any or all of the adsorbed components from the atmosphere.

In some instances, the container may be initially flushed with an inert gas, especially nitrogen or a mixture of, for example, nitrogen and carbon dioxide, and the atmosphere control is begun on that basis to ensure that the desired amounts of water vapour, carbon dioxide, oxygen and ethylene are established either by the removal or the addition of these components (or both) by means of the system of the invention.

In other instances, the container may be initially filled with air and the atmosphere control is such that the system progressively reduces the oxygen content and thereby increases the nitrogen content of the atmosphere, whilst controlling the presence of carbon dioxide and water in particular also.

The system is designed with beds operating on the basis either of pressure swing adsorption/desorption cycles or of temperature swing adsorption/desorption cycles or a combination of pressure swing and temperature swing cycles. Both such cycles are well documented in the art of air separation into its component oxygen and nitrogen parts in particular and the removal of water vapour and carbon dioxide from the air. In the first one, adsorption of a gas component of a mixture occurs and high pressure and desorption at lower pressures (including vacuum when appropriate). In the second, gases adsorbed at a lower temperature can be desorbed by raising the temperature, for example gases adsorbed at ambient temperatures can be desorbed at higher temperatures.

The adsorption means may also comprise a membrane atmosphere component of known type through which different atmosphere components will have different permeabilities.

A particular feature of systems including a pressure swing cycle is that a compressor, which generally must be employed to raise the pressure of the atmosphere prior to its entry into the pressure swing bed, can be employed wholly or in part to effect circulation of the atmosphere from the container, through the beds and back to the container.

With regard to the adsorbent materials used in the beds of the system, it is preferred:
i) for water vapour adsorption, to use one of alumina or silica gel
ii) for carbon dioxide adsorption, to use a zeolite material, for example a zeolite of the 13X-type
iii) for ethylene adsorption, a zeolite material, for example a metal substituted NaY-type in which the zeolite ideally is copper, cobalt or silver substituted, with silver substitution being most preferred
iv) for oxygen removal, to use a zeolite material which preferentially adsorbs nitrogen and to allow the non-adsorbed oxygen to vent from the system and the adsorbed nitrogen to be used for the controlled container atmosphere when desorbed from the zeolite, for example a 13X-type zeolite.

Advantageously, the system can comprise
- a first bed containing alumina or silica gel for the preferential adsorption of water vapour and subsequent desorption of the water vapour on a temperature swing cycle basis
- a second bed containing a metal substituted NaY-type zeolite material for the preferential adsorption of ethylene and subsequent desorption of the ethylene on a temperature swing cycle basis
- a third bed containing a 13X-type zeolite material for the preferential adsorption of carbon dioxide and subsequent desorption of the carbon dioxide on a temperature swing cycle basis
- a fourth bed containing a 13X-type zeolite material for the preferential adsorption of nitrogen and subsequent desorption of the nitrogen on a pressure swing cycle basis.

One or more of the beds of a system of the invention may usefully be split into two (or more) separate portions wherein a first portion is designed to operate in an adsorptive mode whilst a second portion is designed to operate in a desorptive mode during each cycle of the bed.

Overall, therefore, systems of the invention are very flexible in use to achieve a controlled container atmosphere through one or more of:
i) the selective adsorption of certain atmosphere components
ii) the selective return in whole or in part of adsorbed components to the container either directly or by reintroduction of adsorbed gases back into the atmosphere circulating within the system; this reintroduction can be by way of regenerating adsorbed gases with the produce gas of any part of the system
iii) the introduction of desired atmosphere components, for example water vapour and carbon dioxide, from a source external of the system.

Systems in which:
i) at least a fraction of the product atmosphere of a one bed is designed to be used to desorb the adsorbate of another bed, or
ii) at least a fraction of the product atmosphere of a one bed is designed to be used to desorb the adsorbate of another bed
have been found to be useful.

In such systems, preferred options are those in which it is possible when desired that:
i) a fraction of the product atmosphere of the first portion of the bed designed to adsorb water vapour is employed to desorb the water vapour from the second portion of the bed and return at least some of the desorbed water to the container, and/or
ii) a fraction of the nitrogen-rich gas desorbed from the second portion of the bed designed to adsorb nitrogen is employed to desorb the carbon dioxide from the second portion of the carbon dioxide bed and return at least some of the desorbed carbon dioxide to the container.

In preferred embodiments of the invention, the system is programmed to operate in different modes such that the amounts of one or more atmosphere components in the container can be increased or decreased in response to component detectors associated with the container.

For example, in a first mode the system could be programmed to provide a container atmosphere having a predetermined composition (or range of compositions) but that, when a detector reveals that one or more components are above or below that predetermined composition (or range), a second mode is adopted to adjust the composition.

Such adjustment in the different modes may employ any suitable means including the use of external gas sources, the reintroduction in whole or in part of adsorbed gases in the system or the manner in which the adsorbed gases are regenerated, for example by use of product gas from a bed of the system or otherwise.

Systems of the invention may also be programmed in a manner which allows for the predetermined composition (or range) in the container to be changed periodically and for that change to be effected by the adoption of a diferent mode of operation of the system.

For example, it may be expedient for a predetermined atmosphere to be used for an initial period for a particular purpose, for example to kill any insects or other pests present in the container or to destroy bacteria, etc, a normal storage/transportation atmosphere to be used thereafter but finally to adjust the atmosphere for the purpose of, for example, fruit ripening.

It may also be appropriate for other predetermined atmospheres to be used in other modes of operations, for example, to increase the oxygen content of the atmosphere in the event that an alcohol detector in the container revealed premature ripening of certain fruit, etc.

The use of temperature swing cycles for the adsorption/desorption of one or more components of a mixed atmosphere has been found to be particularly suitable for the control of a container atmosphere for use with perishable goods in particular. In accordance with a second aspect of the invention, there is provided a system for controlling the atmosphere of a container for use in the storage and/or transportation of perishable goods, which comprises removing or controlling at least one atmosphere component by selective adsorption of the component in a gas adsorbent material and thereafter effecting recirculation of the controlled atmosphere to the container, wherein means are provided for regeneration of the adsorbed gas from the material on a temperature swing cycle basis.

Advantageously, the container has refrigeration means associated with it and, in preferred embodiments, the invention can utilise the chilled gases to enhance adsorbption and also can allow for the waste heat released by the refrigeration means, and by the condenser in particular, to be used in the temperature swing process by heating the adsorbent material to remove adsorbed gases and thereby to regenerate the adsorbent material.

It is also preferred for the recirculation fan means associated with the container refrigeration means to be employed to urge the container atmosphere to a gas separation unit incorporating the gas adsorbent material. In such cases, it is preferred for the atmosphere feed to the fan (being at a relatively lower pressure) to be positioned away from the atmosphere return to the container to avoid excessive recirculation through the adsorption system. Laterial displacement of the return relative to the feed is preferred.

Selective removal of each of the atmosphere components may be effected in a single bed of adsorbent material or, more usually, in a number of separate beds. Not all the beds in a multi-bed gas separation system need to be operated in a temperature swing basis and, indeed, in some instances it is preferred for these to be a system including PSA processes and TSA processes.

With regard to the adsorbent materials themselves for use in temperature swing cycles:
i) that employed for carbon dioxide removal can usefully be a 13Xtype zeolite molecular sieve which adsorbs the carbon dioxide,
ii) that employed for ethylene can usefully be a metal exchanged Y type zeolite, for example a silver exchanged AgNaY.
iii) that employed for water vapour can usefully be an alumina material or silica gel.

Regeneration of the temperature swig beds can be effected by use of heated purge gases or, alternatively, by the presence of heaters within or around the bed itself, for example electrical heaters.

With regard to the construction of the container in all cases, the associated atmosphere control system can be fitted as an external or internal module or unit to a standard type container or alternatively can be included as an integral part of the container; each bed (or bed portion) may be contained as separate entities within the system; alternatively the adsorbent material of two or more beds (or bed portions) may be held adjacent each other in the system such that a gas mixture passing through a first material will automatically pass to the second material also. If appropriate, the bed or beds can be contained in long tubes shaped so that they can be readily fitted within the confines of the container (and/or the walls of the container) and to use, if necessary or appropriate, the insulation provided by the walls of the container. In this respect, it will be appreciated that the overall shape and size of the container (or reefer) is generally constructed to certain standard sizes world-wide.

If desired the systems could comprise releasable modules for fitting to or within the container such that they may be used in different containers or transported separately from the container itself.

The separation of ethylene from a gas mixture, which may be present albeit in small quantities because of its natural evolution from produce in the container, is generally critical to the adequate preservation of the produce in the container because its presence causes premature ripening of the produce or ageing of flowers. There are, however, difficulties in effecting its removal from gas mixtures in general and from ones in which nitrogen is a major constituent in particular. In accordance with the invention, the material for the preferential separation of ethylene from a gas mixture comprises a type Y zeolite substituted with coper, cobalt or silver. A silver substituted NaY-type zeolite is most preferred. Such materials have generally been found to be useful in reducing levels of ethylene down to part per hundred million levels and to be especially effective in selectively removing ethylene from a nitrogen-containing gas mixture.

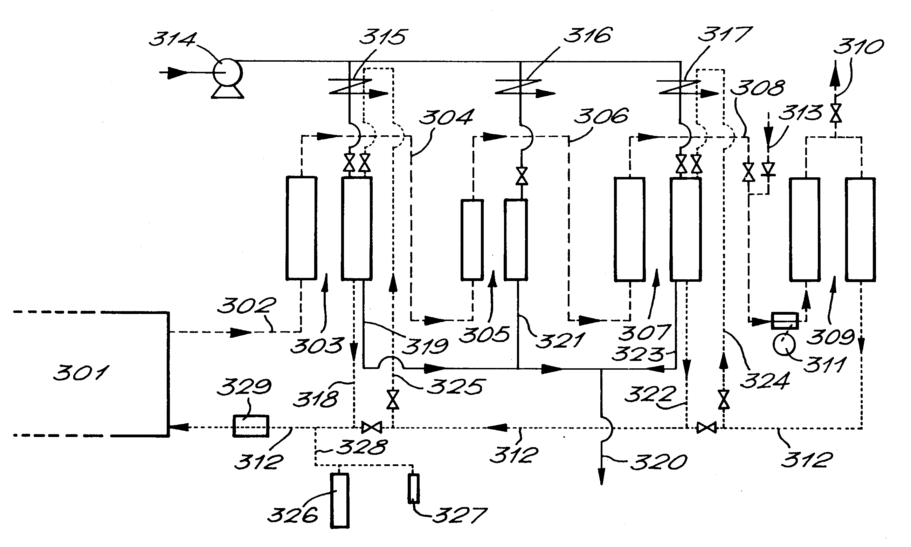

For a better understanding of the invention various different systems of the invention will now be described and reference made, by way of exemplification only, to the accompanying drawing which is a schematic representation of a system of the invention showing in particular different regeneration means for adsorbed gases.

In the embodiment shown in the drawing in particular and generally, systems of the invention employing double column arrangements for the bed(s) of adsorbent material must possess a plurality of valves to allow the temperature swing or pressure swing cycles to operate during use of the systems, especially to isolate one column from the atmosphere feed stream whilst the other column is being regenerated by desorption of the adsorbed atmosphere component. The valves may be any type normally used for such apparatus.

The capacity and size of any bed of the multi-bed systems of the invention will need to be varied from system to system depending on the number of factors including the mode of operation of the system, the anticipated composition of the initial atmosphere in the container and the desired final composition of the container atmosphere.

With regard to the flow of atmosphere around the system, this can be achieved in a number of different ways including:
a) the use of the fan associated with a refrigeration means for the container
b) the use of a compressor being used primarily to increase the pressure of atmosphere feed to a bed being operated on a pressure swing cycle basis; such a compressor may be situated at the inlet to a pressure swing operated bed or, alternatively, elsewhere in the system depending on the pressure requirements in any bed operated on a temperature swing cycle basis
c) the use of any other fan or blower present in the system
or any combination thereof.

Any "make-up" air which is required to replace the gases removed from the atmosphere being circulated around the systems of the invention may be introduced at any appropriate part of the system, for example between the container and a first bed of the system.

Systems of the invention provide the benefit of allowing flexibility in effecting regeneration of the different beds of the systems and also a variety of ways of controlling the resulting atmosphere in the container by, for example, a complete or partial reintroduction of adsorbate gases from one bed into the feed stream for another bed or back to the container.

With reference to the drawing, this shows a system of the invention in which an atmosphere is circulated from and back to a container 301 through the system.

The atmosphere leaves the container 301 and proceeds
i) via a line 302 proceeds to a first double bed 303 comprising alumina for the adsorption of water vapour using a temperature swing cycle between the beds
ii) then via a line 304 to a second double bed 305 comprising a silver substituted AgNaY zeolite for the adsorption of ethylene using a, temperature swing cycle between the beds
iii) then via a line 306 to a third bed 307 comprising a 13X-type zeolite molecular sieve for the adsorption of carbon dioxide using a temperature swing cycle between the beds and
iv) then via a line 308 to a fourth bed 309 comprising a 13X-type zeolite using a pressure swing cycle between the beds.

In the fourth bed, the normally required product gas, nitrogen is adsorbed and an oxygen-rich stream exits the system via the line 310.

The first three beds operate at substantially normal atmosphere pressures, whereas the fourth bed 309 requires a compressor 311 to raise the pressure of the feed gas sufficiently to cause the adsorption of nitrogen in the pressure part of the cycle. This compressor 311 also has the function of driving the atmosphere around the system as a whole.

If it is desired, in a simple mode of operation of the system, to return the nitrogen rich stream obtained by desorption of the bed 309 back to the container 301, this can be effected via a line 312.

"Make-up" air to replace the oxygen in particular removed from the atmosphere can be introduced through the line 313.

Regeneration of the temperature swing beds 303,305 and 307 can be effected in a number of ways.

Firstly, air can be blown by air blower 314 through one or more of these beds, the temperature of the air being controlled either by using the waste heat associated with container refrigeration means and/or by respective heaters 315,316 and 317 so that the correct bed temperature for regeneration is obtained. Alternatively or separately, the beds themselves may be heated directly by means not shown.

Water regenerated in this way can pass via line 318 into line 312 and back to the container 310 or, more usually but depending on the required atmosphere in the container can pass via line 319 to waste gas stream 320.

Regenerated ethylene will pass via line 321 to the waste gas stream 320 as this is not generally required back in the container.

Regenerated carbon dioxide can pass via a line 322 back to the container 301 via the line 312 or, more usually, it can pass via a line 323 to the waste gas stream 320.

Secondly, in different modes of operation, nitrogen-rich gas desorbed from the bed 309 can be used to desorb one or both of the carbon dioxide bed 307 (via a line 324, the heater 317 and the line 322) and the water vapour bed 303 (via a line 325, the heater 315 an the line 318) and then in both cases rejoining the line 312 for return to the container 301.

In addition, supplementary supplies of carbon dioxide and ethylene, for example compressed in cylinders 326 and 327 respectively, are available for introduction to the system if needed via the line 328.

The complete valving for the system clearly is not shown. Equally, the drawing shows the system only in one part of the cycle for each of beds 303, 305, 307 and 309. Separate lines (not shown) are required for the other part of the cycles when the role of the separate portions of each bed is reversed.

Overall, the system can be programmed so that the different modes of operation can be brought into effect as necessary so that the required container atmosphere is attained. It is therefore very flexible.

If it is desired to increase the oxygen content of the atmosphere being returned to the container, for example in the event that the fruit (or whatever) is shown to be respiring at a high rate, this can be achieved by partially or fully closing the valve 329 in particular so that more air is drawn into the system via the line 313.

Finally, a refrigeration 329 is present to cool the atmosphere prior to it being returned to the container.

Various examples will now be described with reference to the preparation of zeolite material for the selective adsorption of ethylene in particular.

### EXAMPLE 1

### PREPARATION OF Co(II) NaY-ZEOLITE

50g of pelletized NaY zeolite (manufactured by Union Carbide) having an average diameter of about 1.6 mm (1/16 inch) was ion exchanged with a 0.5M cobalt chloride solution at 90°C for one hour. The resulting Co(II) NaY zeolite contained 14.7 weight % cobalt as a result of ion the exchange.

### EXAMPLE 2

### PREPARATION OF Cu(II) NaY-ZEOLITE

50g of the pelletized NaY-zeolite described in Example 1 was ion exchanged with 0.1 M copper nitrate in deionized water at room temperature for about 12 hours. The resulting Cu(II) zeolite was thoroughly washed with deionized water and dried for about 24 hours at 105°C in an inert atmosphere. The material was then activated by heating at 400°C under vacuum.

### EXAMPLE 3

### PREPARATION OF Ag(I) NaY ZEOLITE

The NaY zeolite described in Example 1 was ion-exchanged with a 0.1 M silver nitrate solution at 90°C for one hour. The resulting Ag(I) zeolite was thoroughly washed with distilled water, dried for 4 hours at 110°C and then for 8 hours at 350°C.

## Claims

1. A process for removing one or more components from the atmosphere of a container during the storage and/or transportation of perishable goods therein comprising, as sequential steps:
(a) adsorbing water vapour from the atmosphere in a first adsorption zone containing alumina or silica gel, thereby producing as non-adsorbed product water vapour-depleted atmosphere;
(b) adsorbing ethylene from the water vapour-depleted atmosphere in a second adsorption zone containing a type Y zeolite substituted with copper, cobalt or silver, thereby producing as non-adsorbed product an atmosphere depleted in water vapour and ethylene;
(c) adsorbing carbon dioxide from the water vapour-and ethylene-depleted atmosphere in a third adsorption zone containing a zeolite, thereby producing as non-adsorbed product an atmosphere depleted in water vapour, ethylene and carbon dioxide;
(d) passing said atmosphere depleted in water vapour, ethylene and carbon dioxide through a fourth adsorption zone containing a zeolite selective for adsorption of nitrogen, thereby producing as non-adsorbed product oxygen-rich gas, and desorbing sorbed gas from said fourth adsorption zone on a pressure swing cycle basis, thereby producing nitrogen-rich atmosphere, and
(e) recycling said nitrogen-rich atmosphere to said container.

2. A process according to Claim 1, further comprising regenerating the fourth adsorption zone with nonadsorbed product gas from the fourth adsorption zone.

3. A process according to Claim 1, further comprising regenerating at least one of the first or third adsorption zones with said nitrogen-rich atmosphere and recycling to said container the gases desorbed from these adsorption zones.

4. A process according to Claim 1, further comprising regenerating at least one of the first, second and third adsorption zones with dry air and venting the gases desorbed from these zones to the atmosphere.

5. A process according to Claim 1, further comprising operating the first, second and third adsorption zones on temperature swing adsorption cycles.

6. A process according to Claim 1, further comprising operating the fourth adsorption zone on a pressure swing adsorption cycle.

7. A process according to Claim 5, further comprising operating the fourth adsorption zone on a pressure swing adsorption cycle.

8. A process according to Claim 1, wherein the original atmosphere comprises air and the system progressively increases the nitrogen content and decreases the oxygen content of the atmosphere.

9. A process according to Claim 1, wherein the type Y zeolite is substituted with silver.

10. A process according to Claim 1, wherein the adsorbent in the third adsorption zone is type 13X zeolite.

11. A process according to Claim 1, wherein the adsorbent in the fourth adsorption zone is type 13X zeolite.

12. A process according to Claim 9, wherein the adsorbent in both the said third and fourth adsorption zones is type 13X zeolite.

## Patentansprüche

1. Verfahren zum Entfernen einer oder mehrerer Komponenten aus der Atmosphäre eines Containers während Lagerung und/oder Transport von darin befindlichen verderblichen Waren, mit folgenden sequentiellen Schritten:
a) Adsorbieren von Wasserdampf aus der Atmosphäre in einer ersten Adsorptionszone, die Aluminiumoxid oder Silikagel enthält, um als nichtadsorbiertes Produkt eine wasserdampfarme Atmosphäre zu schaffen,
b) Adsorbieren von Ethylen aus der wasserdampfarmen Atmosphäre in einer zweiten Adsorptionszone, die ein Typ-Y-Zeolith enthält, das mit Kupfer, Kobalt oder Silber subtituiert ist, um dadurch als adsorbiertes Produkt eine wasserdampf- und ethylenarme Atmosphäre zu schaffen,
c) Adsorbieren von Kohlendioxid aus der wasserdampf- und ethylenarmen Atmosphäre in einer dritten Adsorptionszone, die ein Zeolith enthält, um dadurch als nichadsorbiertes Produkt eine wasserdampf-, ehtylen- und kohlendioxidarme Atmosphäre zu schaffen,
d) Hindurchleiten der wasserdampf-, ethylen- und kohlendioxidarmen Atmosphäre durch eine vierte Adsorptionszone, die ein für die Adsorption von Stickstoff selektives Zeolith enthält, um dadurch als nicht adsorbiertes Produkt sauerstoffreiches Gas zu schaffen, und Desorbieren von adsorbiertem Gas aus der vierten Adsorptionszone auf Druckwechselbasis, um dadurch eine stickstoffreiche Atmosphäre zu erzeugen, und
e) Rezirkulieren der stickstoffreichen Atmosphäre in den Behälter.

2. Verfahren nach Anspruch 1, das außerdem das Regenerieren der vierten Adsorptionszone mit nicht adsorbiertem Produktgas aus der vierten Adsorptionszone umfaßt.

3. Verfahren nach Anspruch 1, das außerdem das Regenerieren mindestens einer der ersten oder dritten Adsorptionszone mit der stickstoffreichen Atmosphäre und das Rezirkulieren der von diesen Adsorptionszonen desorbierten Gase in den Behälter umfaßt.

4. Verfahren nach Anspruch 1, das weiter das Regenerieren mindestens einer der ersten, zweiten und dritten Adsorptionszonen mit trockener Luft und das Entlüften der von diesen Zonen desorbierten Gase in die Atmosphäre umfaßt.

5. Verfahren nach Anspruch 1, das weiter das Betreiben der ersten, zweiten und dritten Adsorptionszone in Temperaturwechsel-Adsorptionszyklen umfaßt.

6. Verfahren nach Anspruch 1, das weiter das Betreiben der vierten Adsorptionszone in einem Druckwechsel-Adsorptionszyklus umfaßt.

7. Verfahren nach Anspruch 5, das weiter das Betreiben der vierten Adsorptionszone in einem Druckwechsel-Adsorptionszyklus umfaßt.

8. Verfahren nach Anspruch 1, wobei die ursprüngliche Atmosphäre aus Luft besteht und das System fortschreitend den Stickstoffgehalt erhöht und den Sauerstoffgehalt der Atmosphäre verringert.

9. Verfahren nach Anspruch 1, wobei das Typ-Y-Zeolith mit Silber substituiert ist.

10. Verfahren nach Anspruch 1, wobei das Adsorptionsmittel in der dritten Adsorptionszone ein Typ-13X-Zeolith ist.

11. Verfahren nach Anspruch 1, wobei das Adsorptionsmittel in der vierten Adsorptionszone ein Typ-13X-Zeolith ist.

12. Verfahren nach Anspruch 9, wobei das Adsorptionsmittel sowohl in der dritten wie auch in der vierten Adsorptionszone ein Typ-13C-Zeolith ist.

## Revendications

1. Procédé d'extraction d'un ou plusieurs éléments constituants d'une atmosphère d'un récipient pendant le stockage et/ou le transport de denrées périssables placées à l'intérieur, comprenant les étapes successives suivantes :
(a) l'adsorption de la vapeur d'eau de l'atmosphère dans une première zone d'adsorption contenant un gel d'alumine ou de silice, avec production de cette façon, comme produit non adsorbé, d'une atmosphère épuisée en vapeur d'eau,
(b) l'adsorption d'éthylène de l'atmosphère épuisée en vapeur d'eau dans une seconde zone d'adsorption contenant une zéolite de type Y substituée par du cuivre, du cobalt ou de l'argent, avec production, comme produit non adsorbé, d'une atmosphère épuisée en vapeur d'eau et en éthylène,
(c) l'adsorption d'anhydride carbonique de l'atmosphère épuisée en vapeur d'eau et en éthylène dans une troisième zone d'adsorption contenant une zéolite, avec création, comme produit non adsorbé, d'une atmosphère équipée en vapeur d'eau, en éthylène et en anhydride carbonique,
(d) la circulation de l'atmosphère épuisée en vapeur d'eau, en éthylène et en anhydride carbonique dans une quatrième zone d'adsorption contenant une zéolite à sélectivité pour l'adsorption d'azote, avec production de cette façon, comme produit non adsorbé, d'un gaz riche en oxygène, et la désorption du gaz adsorbé de la quatrième zone d'adsorption par mise en oeuvre d'un cycle à alternance de pression, avec création d'une atmosphère riche en azote, et
(e) le recyclage de l'atmosphère riche en azote vers le récipient.

2. Procédé selon la revendication 1, comprenant en outre la régénération de la quatrième zone d'adsorption par le gaz produit non adsorbé provenant de la quatrième zone d'adsorption.

3. Procédé selon la revendication 1, comprenant en outre la régénération de l'une au moins des zones d'adsorption de la première à la troisième avec l'atmosphère riche en azote, et le recyclage vers le récipient des gaz désorbés provenant de ces zones d'adsorption.

4. Procédé selon la revendication 1, comprenant en outre la régénération de l'une au moins des première, seconde et troisième zones d'adsorption par de l'air sec, et la ventilation des gaz désorbés provenant de ces zones vers l'atmosphère.

5. Procédé selon la revendication 1, comprenant en outre la mise en oeuvre des première, seconde et troisième zones d'adsorption dans des cycles d'adsorption à alternance de température.

6. Procédé selon la revendication 1, comprenant en outre la commande de la quatrième zone d'adsorption par un cycle d'adsorption à alternance de pression.

7. Procédé selon la revendication 5, comprenant en outre la commande de la quatrième zone d'adsorption avec un cycle d'adsorption à alternance de pression.

8. Procédé selon la revendication 1, dans lequel l'atmosphère originale est de l'air et l'ensemble augmente progressivement la teneur en azote et réduit la teneur en oxygène de l'atmosphère.

9. Procédé selon la revendication 1, dans lequel la zéolite de type Y est substituée par de l'argent.

10. Procédé selon la revendication 1, dans lequel l'adsorbant de la troisième zone d'adsorption est une zéolite de type 13X.

11. Procédé selon la revendication 1, dans lequel l'adsorbant de la quatrième zone d'adsorption est une zéolite de type 13X.

12. Procédé selon la revendication 9, dans lequel l'adsorbant de la troisième et de la quatrième zone d'adsorption est une zéolite de type 13X.
